# EUROPÄISCHE PATENTSCHRIFT

(11) **EP 1 032 495 B1**
(45) Veröffentlichungstag und Bekanntmachung des Hinweises auf die Patenterteilung: **06.08.2003**
(21) Anmeldenummer: 98961225.4
(22) Anmeldetag: 20.11.1998
(51) Int. Cl.: B32B 27/08, B42D 15/10

(54) **SCHUTZFOLIE ZUM SCHUTZ UND ZUM RAHMEN VON GRAPHISCHEN GEBILDEN**
PROTECTIVE FILM FOR PROTECTING AND FRAMING GRAPHIC OBJECTS
FILM DE PROTECTION POUR PROTEGER ET ENCADRER DES PRODUITS GRAPHIQUES

(30) Priorität: 21.11.1997 DE 19751607
(43) Veröffentlichungstag der Anmeldung: 06.09.2000
(73) Patentinhaber: USP-Innovation & Patentverwertungs GmbH, 9020 Klagenfurt (AT)
(72) Erfinder: LENGFELDNER, Erhard, A-9020 Klagenfurt (AT)
(74) Vertreter: Riebling, Peter, Dr.-Ing.
(86) Internationale Anmeldenummer: EP9807455
(87) Internationale Veröffentlichungsnummer: WO99026782

(56) Entgegenhaltungen:
- WO-A-90/02053
- US-A- 4 231 833
- US-A- 4 914 842
- US-A- 5 376 418

## Beschreibung

Gegenstand der vorliegenden Erfindung sind Schutzfolien zum Schutz und zum Rahmen von graphischen Gebilden nach dem Oberbegriff des Patentanspruchs 1 und Verfahren zu deren Herstellung nach dem Oberbegriff der Ansprüche 23 bis 25.

Derartige Schutzfolien werden zum Schutz und zum Rahmen von Fotografien, Visitenkarten, Computerausdrucken, Kopiererausdrucken und allgemeinen graphischen Druckerzeugnissen verwendet, wobei unter Schutzfolien weitgehend transparente Rahmenanordnungen aus thermoplastischen biegsamen Folien zu verstehen sind, die mit einem Kleber beschichtet sind und mit einer leicht ablösbaren gleich großen Abdeckfolie abgedeckt sind. Nach Trennung der Abdeckfolie kann die Schutzfolie sehr einfach auf einen gewünschten Bildausschnitt appliziert werden und derart als Schablone zum Beschneiden von Fotos, insbesondere im Format einer Kreditkarten, dienen. So können Lieblingsfotos in Kreditkarten-Größe hergestellt werden, als auch übliche Fotografien in Standardformaten mit Schutzfolien versehen werden bzw. beliebige graphische Druckerzeugnisse mit derartigen Schutzfolien versehen werden.
Bei herkömmlichen Foto-Rahmen und Schutzfolien-Anordnungen besteht das Problem, daß eine vollfläche Kleberbeschichtung der transparenten Schutzfolien zu optisch nicht akzeptablen Laminierergebnissen führen. Bisher verwendete adhäsive Beschichtungssysteme verursachen beim Laminieren Lufteinschlüsse, Fehlklebungen und weiters einen sogenannten Grauschleier durch kleinste Luftbläscheneinschlüsse und auch durch eine leicht milchig trübe Kleberausführung.

Zur Vermeidung derartiger optisch stark störender Effekte werden Klebebeschichtungen von Rahmenanordnungen oftmals nur im Bereich des äußeren Randes angeordnet, wie es z.B. aus der EP 0 431 053 B1 bekannt ist. Dadurch werden optisch einwandfreie glasklare Schutzeffekte erzielt. Der Nachteil derartiger Systeme liegt in der aufwendigen Herstellmethode und der Notwendigkeit, stark adhäsiv wirkende Kleber zu verwenden, da ja nur der Verbund zwischen Foto-Rahmen und Fotografie in einem wenige Millimeter breiten Randbereich gegeben ist.

Der vorliegenden Erfindung liegt die Aufgabe zugrunde, die genannten Nachteile bei bekannten Foto-Rahmen bzw. Schutzfolien zu überwinden und eine Schutzfolie und ein Herstellungsverfahren zu schaffen, bei dem eine Klebebeschichtung mit höchsten Qualitätsmerkmalen, einfachster und sicherster und korrigierbarer Applikationsmethode bei attraktiven Herstellkosten möglich ist.

Diese Aufgabe wird erfindungsgemäß durch die kennzeichnenden Merkmale des Patentanspruchs 1 bzw. der Patentansprüche 23 bis 25 gelöst.

In einer typischen Ausführungsform wird ein bevorzugt 350 Mikrometer dicker transparenter thermoplastischer Kunststoffbogen grafisch mittels Offsetdruck, Flexodruck, Siebdruck oder neuartigen digitalen Druckverfahren grafisch derart gestaltet, daß bevorzugt eine Rahmenanordnung gebildet wird.

Als Kunststoffolien können alle Arten von transparenten thermoplastischen Folien eingesetzt werden, wie beispielsweise aus PVC (Polyvinylchlorid), PS (Polystyrol), PP (Polypropylen), PC (Polycarbonat), PMMA (Polymethylmethacrylat), PETP (Polyäthylenterephthalat), usw. Bevorzugt werden jedoch glasklare, Schlieren-, Fehlstellenund Stippen- freie Materialien mit guter Bedruckbarkeit und guter Stanzbarkeit, wie beispielsweise glykolmodifizierte Polyesterfolien, A-PET Folien, PC-Folien, usw. eingesetzt. Neben der Bogenware können, speziell bei dünneren Folienstärken, auch Rollenware und dementsprechende Druckverfahren eingesetzt werden.

Die derart grafisch gestalteten Druckbögen werden anschließend bevorzugt mittels Siebdruck und sehr feinen Siebgeweben mit im Foto-Rahmen Bereich rasterförmigen adhäsiven Schichten auf Basis Acrylharzen, Polyesterharzen und/oder Polyurethanen versehen, so daß glasklare Kleberschichten mit Trockendicken im Bereich 2 bis 10 Mikrometer und einer 30- bis 70%-igen Flächendeckung von nicht zusammenhängenden Rasterelementen mit 20 bis 200 Mikrometer Abmessungen erreicht werden.

Zum Druck der adhäsiven rasterförmigen Schichten werden dabei bevorzugt 140T - Gewebe eingesetzt, und beispielsweise bei einem Naßauftrag von 15 Mikrometer eine Trockendicke von nur 6 Mikrometer erreicht.
Um die hohe Transparenz zu erreichen, müssen die bei Adhäsivklebern üblichen Füllstoffe so gering wie möglich gehalten werden und die Weichmacher müssen gebunden sein, so daß keine Diffusion in die graphischen Gebilde erfolgen kann, was zu Farbänderungen im Laufe der Zeit führen würde und die Rasterelemente dürfen nicht zusammenhängend ausgeführt werden, so daß beim Klebeprozeß Luft entweichen kann und derart keine Fehllamination durch Lufteinschlüsse geschehen kann.

Die einzelnen Rasterelemente werden bevorzugt als runde Punkte mit 20 bis 200 Mikrometer Durchmesser ausgeführt. Dabei haben sich insbesondere Punkte mit 80 Mikrometer Durchmesser und 40 Mikrometer gegenseitigem Abstand als optisch attraktive und fertigungstechnisch machbare Variante herausgestellt.

In weiteren Ausführungsformen können diese nicht zusammenhängenden Rasterelemente beliebige geometrische Formen, wie beispielsweise ovale Punkte, Dreiecke, Sechsecke, Striche, Vielecke und Kombinationen aus geometrisch unterschiedlichen Elementen in geometrisch geordneter, in willkürlicher und in graphisch gestalteter Anordnung, aufweisen.

Nach einem üblichen Trockenprozeß durch Ablüften werden die mit Kleber beschichteten Bögen mit speziellen Abdeckfolien versehen und abgestapelt.

In einer bevorzugten Ausführungsform werden dabei graphisch mittels Offsetdruck gestaltete Papierbögen mit typisch 170 gr/m² Flächengewicht anschließend mit einer Trennschicht bzw. sogenannten Release-Beschichtung versehen, wobei Offset- als auch Siebdruck-Maschinen eingesetzt werden können und üblicherweise 3 bis 5% Flüssigsilikone den üblichen UV-Lacken beigemengt werden. Diese Oberflächenbeschichtung muß sehr sorgfältig auf die rasterförmige Klebebeschichtung abgestimmt werden. Hierbei muß besonders auf leichte Trennbarkeit geachtet werden, da die Trennung der Foto-Rahmen Anordnung von der rückseitigen Schutzfolie lediglich durch Verbiegen stattfinden soll.

Die derart gefertigten Mehrfachnutzen von graphisch gestalteten und klebebeschichteten, transparenten Kunststoffolien und mittels Kantenregistrierung passgenauer Applikation der grafisch und trennbar ausgeführten Schutzfolien bzw. Papierbögen werden nun im Stapel einer typischen Kreditkartenstanze zugeführt und auf das entsprechende Einzelformat gestanzt und bevorzugt in Magazine abgestapelt.

In eine ersten Weiterbildung der Erfindung ist vorgesehen, die Schutzfolie auf Basis von zwei oder mehreren Laminat-Kunststoffolien herzustellen. Ein derartiger Schutzfolien-Verbund wird bevorzugt auf sogenannten Heiz-Kühl-Transferpressen hergestellt. Der Vorteil dieser Variante liegt in der Verwendbarkeit von typisch 100 bis 200 Mikrometer dicken transparenten Folien, die auf schnell laufenden Offset- und Zylindersiebdruckanlagen graphisch gestaltbar sind und derart mit meist seidenmatten Oberflächen bedruckt werden und anschließend durch den Laminiervorgang einerseits zu einem qualitativ hochwertigen Verbund verschmolzen werden.

In einer Weiterbildung bei der Herstellung dieser Foto-Rahmen- bzw. Schutzfolien-Anordnung ist vorgesehen, keine Mehrfachnutzendrucke auszuführen, sondern im thermoplastischen Spritzguß hergestellte transparente Schutzfolien- bzw. Rahmen-Anordnungen oder auch stanztechnisch hergestellte Schutzfolien- bzw. Rahmen-Anordnungen in Einzeldruckwerken grafisch zu gestalten und rasterförmig mit Adhäsivkleber zu beschichten und auf gleich große Schutzfolien aufzubringen. Der Vorteil dieser Methode liegt in der hohen Flexibilität hinsichtlich unterschiedlicher kundenspezifischer grafischer Gestaltungsmöglichkeit der Foto-Rahmen- bzw. Schutzfolien-Anordnung als auch der graphischen Gestaltung der Abdeckfolien und des Wegfallens eines anschließenden Stanzvorganges und können auch hinsichtlich der erforderlichen Anlagen weitgehend Serienanlagen aus der Kreditkarten- und Chipkarten-Fertigung verwendet werden.

In der Herstellvariante mittels Spritzguß muß insbesondere auf die gute Transparenz, die leichte Fließfähigkeit und die schlagzähe Einstellung des thermoplastischen Kunststoffes geachtet werden und werden aus Kosten- und Herstellgründen neben transparenten PVC (Polyvinylchlorid)-, Polycarbonat- und PMMA (Polymethylmethacrylat)- Kunststoffen insbesondere schlagzäh eingestellte Polystyrol- Kunststoffe, wie beispielsweise STYROLUX der Firma BASF, bevorzugt eingesetzt.

Weitere Einzelheiten, Aspekte und Vorteile der vorliegenden Erfindung ergeben sich aus der nachfolgenden Beschreibung unter Bezugnahme auf die Zeichnungen. Es zeigt:
Fig. 1 einen Schnitt durch eine typische Schutzfolie mit Abdeckfolie entlang der Linie I-I in Fig. 2.
Fig. 2 die Positionierung der Schutzfolie auf dem gewünschten Bildausschnitt eines graphischen Gebildes.
Fig. 3 zeigt das fertige Endprodukt, also den Foto-Ausschnitt mit applizierter Schutzfolie.
Fig. 4 einen Schnitt durch eine typische Schutzfolie mit Abdeckfolie entlang der Linie I-I in Fig. 2 in vergrößerter Abbildung.
Fig. 5 eine Draufsicht auf eine typische rasterförmige Klebebeschichtung.
Fig. 6 eine Draufsicht auf eine sechseckige rasterförmige Klebebeschichtung.
Fig. 7 eine Draufsicht auf eine oval-längliche rasterförmige Klebebeschichtung.
Fig. 8 einen Schnitt durch eine typische Schutzfolie auf Basis von zwei Laminat-Kunststoffolien mit Abdeckfolie entlang der Linie I-I in Fig. 2.
Fig. 9 einen Schnitt durch eine typische Schutzfolie auf Basis von drei Laminat-Kunststoffolien mit Abdeckfolie entlang der Linie I-I in Fig. 2.
Fig. 10 einen Schnitt durch eine typische Schutzfolie auf Basis von drei Laminat-Kunststoffolien mit Abdeckfolie entlang der Linie I-I in Fig. 2 mit Oberflächen- und Innenseitenprägung.

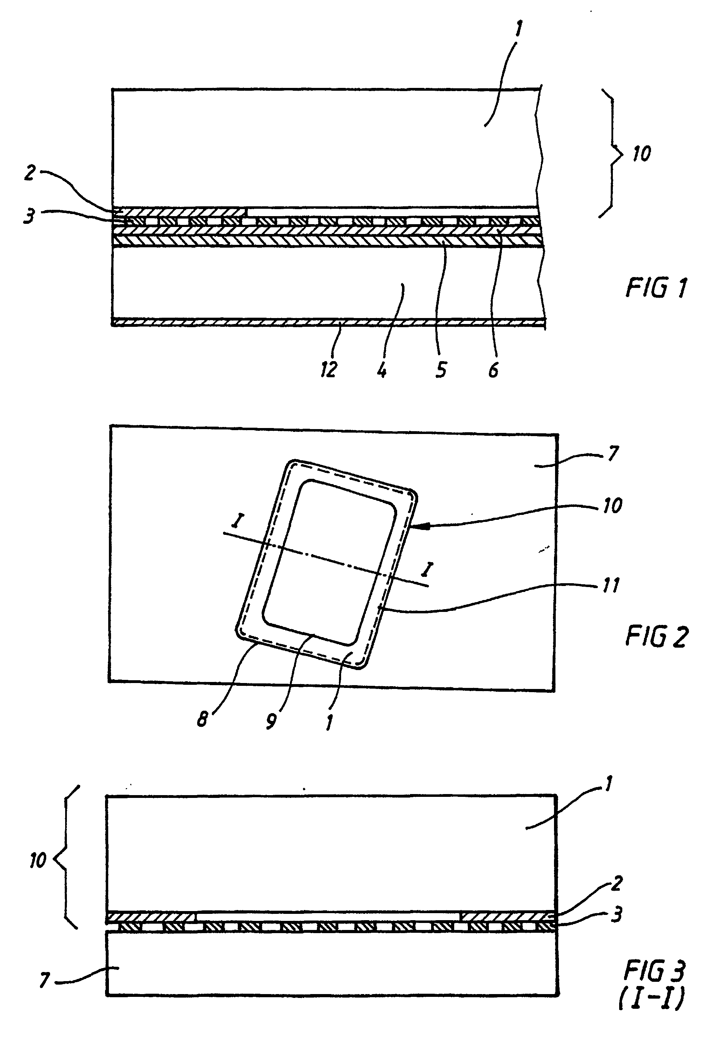

Fig. 1 zeigt einen Schnitt durch die erfindungsgemäße Schutzfolie 10 mit Abdeckfolie 4.
Die Schutzfolie 10 besteht aus einer flexiblen und transparenten Kunststoffolie 1 mit einer typischen Stärke von 350 Mikrometern. Auf der Unterseite wird die Kunststoffolie 1 mit einer graphischen Gestaltung 2 bedruckt, die z.B. die Form einer Umrahmung haben kann. Es sind vielerlei andere Gestaltungsmöglichkeiten denkbar.
Auf die graphisch bedruckte Kunststoffolie 1,2 wird nun erfindungsgemäß eine glasklare rasterförmige Klebebeschichtung 3 aufgebracht. Dies erfolgt mittels Siebdruck und sehr feinem Siebgewebe, wobei eine Klebebeschichtung auf Basis Acrylharzen, Polyesterharzen und/oder Polyurethanen verwendet wird und die Haftung von permanent haftend bis lösbar einstellbar ist.
Die rasterförmig aufgebrachte Adhäsivbeschichtung wird erfindungsgemäß aus nicht zusammenhängenden Elementen mit 20 bis 200 Mikrometern Abmessungen und 30 bis 70% Flächendeckung mit einer Trocken-Schichtdicke von vorzugsweise 2 bis 10 Mikrometern gebildet.

Die Klebebeschichtung 3 ist mittels einer Abdeckfolie 4 abgedeckt und geschützt. In einer bevorzugten Ausführungsform werden als Abdeckfolie 4 graphisch mittels Offsetdruck gestaltete Papier- oder Kunststoffbögen verwendet, die an ihrer der Klebeschicht 3 zugewandten Seite mit einer Trennbeschichtung 6 bzw. einer sogenannten Release-Beschichtung versehen sind. Unter der Trennbeschichtung 6 kann ebenfalls eine graphische Gestaltung 5 auf die Abdeckfolie 4 aufgedruckt sein. Ebenso ist eine graphische Gestaltung 12 der anderen Seite der Abdeckfolie 4 möglich. Die Verwendung einer nur teilweise bedruckten bzw. graphisch gestalteten transparenten Abdeckfolie 4 ist ebenfalls möglich.
Die Darstellung die Schichtstärke der Kunststoffolie 1 mit typisch 350 Mikrometern im Verhältnis zu der Schichtstärke der graphischen Gestaltung 2 mit typisch 3 bis 15 Mikrometern und der Schichtstärke der Klebebeschichtung 3 mit typisch 2 bis 10 Mikrometern ist in den Figuren nicht maßstäblich wiedergegeben.

Fig. 2 zeigt die Positionierung der Schutzfolie 10 auf dem gewünschten Bildausschnitt eines graphischen Gebildes 7. Zuvor wurde die Abdeckfolie 4 von der Schutzfolie 10 abgezogen, so daß die Kleberbeschichtung 3 freiliegt und die Schutzfolie 10 an der gewünschten Stelle auf das graphische Gebilde 7 geklebt werden kann.
Das Abziehen der Abdeckfolie 4 wird durch die geringe Haftkraft der Trennbeschichtung 6 auf der Klebebeschichtung 3 dadurch erreicht, daß die gesamte Schutzfolie 10 mit der entsprechend gestalteten Abdeckfolie 4 verbogen wird und derart sich die Abdeckfolie 4 von der Schutzfolie 10 trennen läßt.
In einer speziellen Ausführungsform wird die Abdeckfolie 4 auf der Rückseite derart geritzt, daß durch Verbiegen die geritzten Kanten der Abdeckfolie 4 aufspringen bzw. sich von der Klebebeschichtung lösen und einfach entfernt werden können.

Unter Verwendung einer üblichen Schere zum Beschneiden des graphischen Gebildes 7 wird die Größe des Bildausschnitts an die Größe der Schutzfolie 10 angepaßt, wobei der äußere Rahmenrand 8 der Schutzfolie 10 als Hilfslineal für die Schere verwendet wird. Der Rahmen, begrenzt durch den äußeren Rahmenrand 8 und durch den inneren Rahmenrand 9, wird beispielsweise durch Druck der graphischen Gestaltung 2 gebildet.

Wie man erkennt, erfolgt der Auftrag der Klebeschicht 3 bevorzugt nicht bis zum äußeren Rahmenrand 8. Das hat den Vorteil, daß die Stanzwerkzeuge zum Ausstanzen der Schutzfolien 10 nicht durch Klebstoff 3 verschmutzt werden und bei der fertigen Schutzfolie 10 mit angeklebtem graphischem Gebilde 7 der Kleber am Rand nicht störend wirkt. Der Abstand des äußeren Randes 11 der Klebeschicht 3 zum äußeren Rahmenrand 8 muß dabei nur Bruchteile eines Millimeters betragen.

Fig. 3 zeigt schließlich einen Schnitt durch den gewünschten Ausschnitt des graphischen Gebildes 7 mit applizierter Schutzfolie 10.

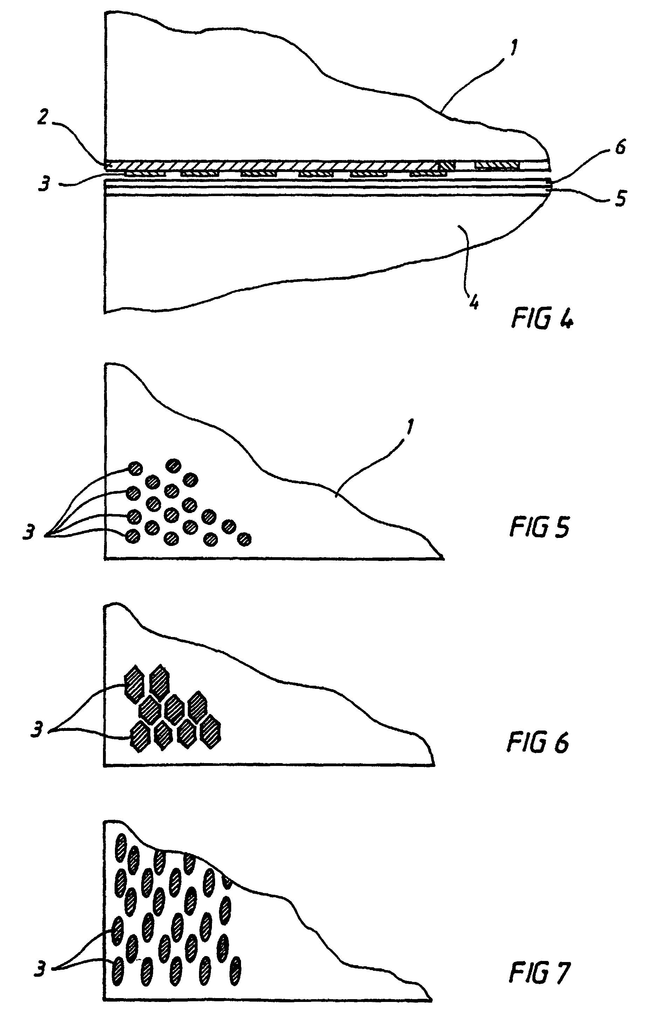

Fig. 4 zeigt einen Schnitt in vergrößerter Darstellung durch eine abgewandelte Ausführung der Schutzfolie 1 mit Abdeckfolie 4. Im Unterschied zur Ausführung gemäß Figur 1 ist die rasterförmige Klebebeschichtung 3 teilweise auf der graphischen Gestaltung 2 als auch direkt auf der Kunststoffolie 1 angebracht.

Fig. 5 zeigt eine Draufsicht auf eine rasterförmige Klebebeschichtung 3 mit runden Elementen mit typisch 80 Mikrometern Durchmesser und typisch 40 Mikrometer Abstand. Eine derartige Klebebeschichtung kann bei geeigneter Siebherstellung und Verwendung von Zylindersiebdruckautomaten mit entsprechenden Trockenkanälen mit hohen Stundenleistungen realisiert werden. Die nicht zusammenhängende Elementeform ist für das Entweichen von Luft während der Applizierung auf dem Ausschnitt eines graphischen Gebildes sehr wesentlich, und dadurch können Fehllaminationen und Lufteinschlüsse vermieden werden. Weiters wird bei manueller Verklebung der Schutzfolie 10 mit einem graphischen Gebilde durch die 30-bis 70%-ige Flächendeckung dieser höckerartigen Kleber-Elemente 3 und durch Zusammendrücken von Fingern eine höherer Druck auf die zu verklebenden Partner ausgeübt, als bei vollflächiger Klebebeschichtung.

Fig. 6 zeigt eine Draufsicht auf eine rasterförmige Klebebeschichtung 3 mit sechseckigen Kleber-Elementen.

Fig. 7 zeigt eine Draufsicht auf eine rasterförmige Klebebeschichtung 3 mit oval-länglichen Kleber-Elementen. Diese Figuren sollen nur beispielhaft die vielfältigen Möglichkeiten der geometrisch geordneten, willkürlich angeordneten und/oder künstlerisch gestalteten rasterförmiger Klebebeschichtung 3 darstellen.

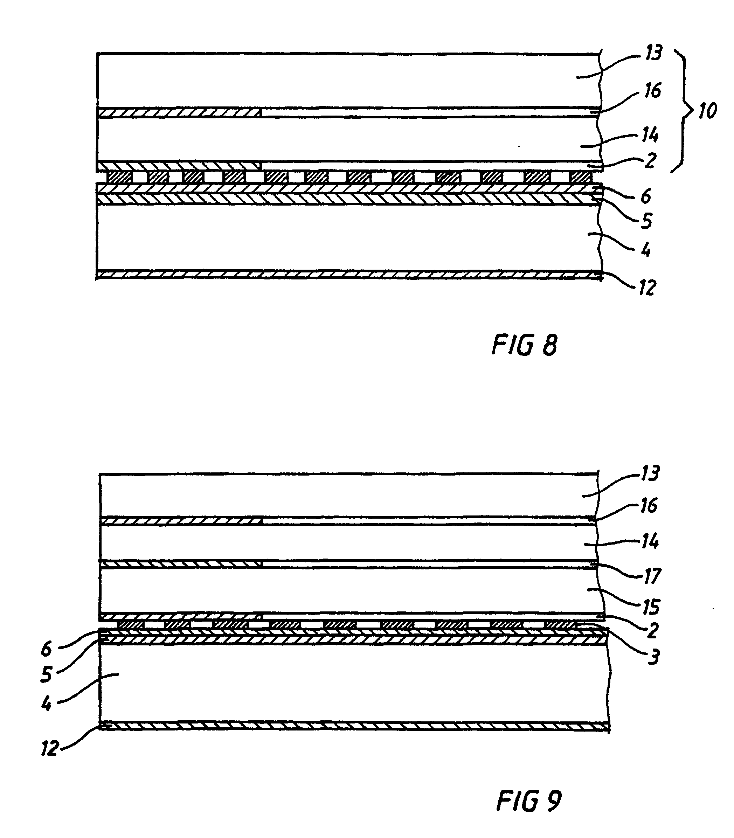

Fig. 8 zeigt einen Schnitt durch eine weitere Ausführungsform der Schutzfolie 10 auf Basis von zwei Laminat-Kunststoffolien 13,14 mit Abdeckfolie 4. Ein derartiger Schutzfolien-Verbund 13,14 wird bevorzugt auf sogenannten Heiz-Kühl-Transferpressen hergestellt. Der Vorteil dieser Variante liegt in der Verwendbarkeit von typisch 100 bis 200 Mikrometer dicken transparenten Folien 13, 14, die auf schnell laufenden Offset- und Zylindersiebdruckanlagen graphisch gestaltbar sind und derart mit meist seidenmatten Oberflächen bedruckt werden und anschließend durch den Laminiervorgang einerseits zu einem qualitativ hochwertigen Verbund verschmolzen werden und andererseits im Hochschmelzlaminiervorgang sehr kostengünstig die beiden Oberflächen durch Verwendung von entsprechend gestalteten Pressblechen ausgeführt werden können.
Derartige Herstellmethoden sind bestens aus der Kunststoffkartenproduktion bekannt. Dabei kann die graphische Gestaltung 2 auf der Unterseite der unteren Folie 14 und/oder eine graphische Gestaltung 16 zwischen den beiden Folien 13,15 realisiert sein.
Insbesondere entfallen bei dieser Herstellmethode die bei hochglänzenden Kunststoffolien notwendigen Schutzfolien aus beispielsweise adhäsiv haftenden Polyäthylenfolien, die bei Kunststoffolien mit einigen 100 Mikrometer Dicke oftmals beidseitig verwendet werden müssen und deren Entfernung vor dem Druckprozeß mühsam und kostenaufwendig ist und zusätzlich die hochglänzenden Kunststoffoberflächen ohne Schutzfolie im laufenden Herstellprozeß leicht zerkratzt bzw. optisch störend beschädigt werden.
Bei der Verwendung von zwei oder mehreren Laminat-Kunststoffolien 13,14 können sämtliche Kratzer und Scheuerstellen durch den Hochschmelzlaminiervorgang beseitigt werden und können die Oberflächen durch Wahl der Pressblechoberflächen im weiten Rahmen nach Wunsch gestaltet werden.

Fig. 9 zeigt einen Schnitt durch eine typische Schutzfolie auf Basis von drei Laminat-Kunststoffolien 13-15 mit Abdeckfolie 4. Es gelten die unter Fig. 8 genannten Aspekte. Vorteilhafterweise werden bei der Wahl von drei Laminat-Kunststoffolien 13-15 mit typisch je 120 Mikrometer Dicke eine Gesamtdicke von etwa 360 Mikrometer erreicht, was sich als geeignete Gesamtdicke für eine Schutzfolie 10 herausgestellt hat. Die Verfügbarkeit von etwa 120 Mikrometer dicken transparenten Laminat-Kunststoffolien ist deshalb von besonderem Interesse, da derartige Folien in der Kreditkartenindustrie als sogenannte Overlayfolien, also Deckfolien für Kunststoffkarten in den verschiedenen thermoplastischen Materialien kostengünstig und logistisch einfach zur Verfügung stehen. An der Unterseite der untersten Folienlage 15 kann eine graphische Gestaltung 2 aufgebracht sein. Genauso können graphische Gestaltungen 16,17 zwischen den Folienlagen 13,14 und/oder 14,15 aufgebracht sein.

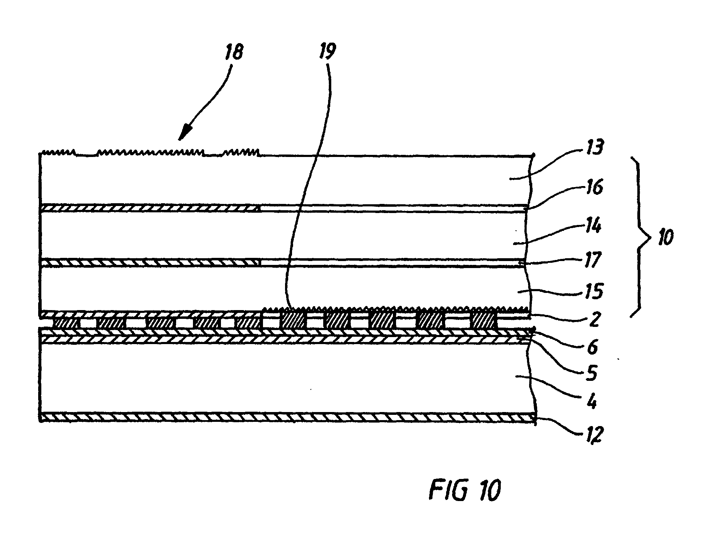

Fig. 10 zeigt einen Schnitt durch eine typische Schutzfolie auf Basis von drei Laminat-Kunststoffolien 13-15 mit Abdeckfolie 4 gemäß Figur 9. Die äußeren Folienlagen 13 und 15 sind dabei zusätzlich mit Oberflächen- und Innenseitenprägung 18, 19 versehen.
Üblicherweise bieten hochglänzende transparente Kunststoffolien 1 bzw. 13-15 die geringste optische Störung bei der Verwendung als Schutzfolie 10 über dem Ausschnitt eines graphischen Gebildes 7. Allerdings werden hochglänzende Oberflächen üblicher thermoplastischer Kunststoffolien rasch zerkratzt und verlieren derart an Qualität, so daß häufig zusätzliche Oberflächenbeschichtungen in Form von Lacken, meist in UVhärtender Ausführung, aufgebracht werden. Alternativ dazu werden häufig auch sogenannte seidenmatte oder mattierte Oberflächen verwendet und derart optisch weniger leicht geschädigt. Zusätzlich wirken derart strukturierte Oberflächen meist entspiegelnd und griffiger.
Durch die geeignete Wahl von strukturierten Pressblechen kann nun beispielsweise die Oberfläche der Kunststoffolie 1 bzw. der obersten Laminat-Kunststoffolie 13 mit einer Oberflächenprägung 18 derart gestaltet werden, daß ein umlaufender Rand beispielsweise erhaben matt mit beispielsweise glänzendem Schriftzug ausgeführt wird und der Bereich innerhalb des inneren Rahmenrandes 9 wird hochglänzend ausgeführt. Eine derartige Ausführung wird beim Übereinanderstapeln nur Berührungspunkte auf dem erhabenmatten umlaufenden Rand aufweisen und derart den innenliegenden hochglänzenden und für die Betrachtung des gewählten graphischen Gebildes 7 wesentlichen Bereiches schützen.
Neben der Strukturierung matter und glänzender Strukturen und Schriftzüge bzw. graphischer Gebilde kann die Ausbildung von Linsen bzw. Linsenstrukturen zusätzlich optische Effekte bewirken und derartige Schutzfolien 10 aufwerten.

Eine Innenseitenprägung 19 kann sich ebenfalls vorteilhaft hinsichtlich Entspiegelung und hinsichtlich Haftung der graphischen Gestaltung 2 bzw. der Klebebeschichtung 3 auswirken und kann zusätzlich ein gestalterisches Element darstellen.

Alle diese Möglichkeiten lassen sich auch sehr einfach durch Karten mittels thermoplastischen Spritzguß realisieren, da durch die Gestaltung der Spritzgußwerkzeuge derartige Oberflächeneffekte kostengünstig und qualitativ sehr hochwertig ausgeführt werden können. Allerdings sind der Gesamtdicke untere Grenzen von typisch 500 Mikrometern vorgegeben.

### Zeichnungslegende

- 1: Kunststoffolie
- 2: Graphische Gestaltung (Kunststoffolie Unterseite)
- 3: Klebebeschichtung
- 4: Abdeckfolie
- 5: Graphische Gestaltung (Abdeckfolie Oberseite)
- 6: Trennbeschichtung
- 7: Graphisches Gebilde
- 8: Äußerer Rahmenrand
- 9: Innerer Rahmenrand
- 10: Schutzfolie
- 11: Äußerer Rand der Klebebeschichtung
- 12: Graphische Gestaltung (Abdeckfolie Unterseite)
- 13: Laminat-Kunststoffolie (erste)
- 14: Laminat-Kunststoffolie (zweite)
- 15: Laminat-Kunststoffolie (dritte)
- 16: Grafische Gestaltung (Innenlage 1)
- 17: Grafische Gestaltung (Innenlage 2)
- 18: Oberflächenprägung.
- 19: Innenseitenprägung

## Patentansprüche

1. Schutzfolie zum Schutz und zum Rahmen von graphischen Gebilden, wie Fotografien, Visitenkarten, Computerausdrucken, Kopiererausdrucken und allgemeinen grafischen Druckerzeugnissen auf Basis von weitgehend transparent gestalteten Schutzfolienanordnungen aus thermoplastischen Kunststoffolien, auf welche eine Klebebeschichtung aufgebracht ist, die mit einer leicht lösbaren Abdeckfolie abgedeckt ist, **dadurch gekennzeichnet, daß** die Klebebeschichtung (3) eine transparente und rasterförmig aufgebrachte Adhäsivbeschichtung mit einer Schichtdicke zwischen 2 und 50 Mikrometern ist.

2. Schutzfolie nach Anspruch 1, **dadurch gekennzeichnet, daß** die Klebebeschichtung (3) eine Schichtdicke von lediglich 2 bis 10 Mikrometer aufweist.

3. Schutzfolie nach Anspruch 1 oder 2, **dadurch gekennzeichnet, daß** die Klebebeschichtung (3) 30% bis 70% Flächendeckung aufweist, und aus nicht zusammenhängenden Elementen mit 20 bis 200 Mikrometern Abmessung besteht.

4. Schutzfolie nach einem der Ansprüche 1 bis 3, **dadurch gekennzeichnet, daß** die Klebebeschichtung (3) mittels Siebdruck aufgebracht ist.

5. Schutzfolie nach einem der Ansprüche 1 bis 4, **dadurch gekennzeichnet, daß** die Klebebeschichtung (3) auf Basis Acrylharzen, Polyesterharzen und/oder Polyurethanen aufgebaut ist und die Haftung von permanent haftend bis lösbar einstellbar ist.

6. Schutzfolie nach einem der Ansprüche 1 bis 5, **dadurch gekennzeichnet, daß** die Klebebeschichtung (3) partiell aufgebracht wird.

7. Schutzfolie nach einem der Ansprüche 1 bis 6, **dadurch gekennzeichnet, daß** die Kunststoffolie (1) eine Dicke zwischen 80 und 800 Mikrometern aufweist.

8. Schutzfolie nach einem der Ansprüche 1 bis 7, **dadurch gekennzeichnet, daß** die Kunststoffolie (1) mit einer graphischen Gestaltung (2) bedruckt ist.

9. Schutzfolie nach einem der Ansprüche 1 bis 8, **dadurch gekennzeichnet, daß** die Abdeckfolie (4) auf ihrer der Klebebeschichtung (3) zugewandten Seite eine Trennbeschichtung (6) trägt.

10. Schutzfolie nach einem der Ansprüche 1 bis 9, **dadurch gekennzeichnet, daß** die Trennbeschichtung (6) partiell und bevorzugt entlang einer der vier Seitenkanten und/oder einer oder mehreren der vier Ecken eine mehrere Millimeter breite wesentlich stärkere Antihaftwirkung bzw. keinerlei Haftwirkung zur Klebebeschichtung (3) aufweist.

11. Schutzfolie nach einem der Ansprüche 1 bis 10, **dadurch gekennzeichnet, daß** die Abdeckfolie (4) auf einer oder beiden Seiten mit einer graphischen Gestaltung (5,12) bedruckt ist.

12. Schutzfolie nach einem der Ansprüche 1 bis 11, **dadurch gekennzeichnet, daß** die Abmessung der Schutzfolie (10) Kreditkartenformat aufweist.

13. Schutzfolie nach einem der Ansprüche 1 bis 12, **dadurch gekennzeichnet, daß** die Abmessung der Schutzfolie (10) Fotoformat oder Postkartenformat aufweist.

14. Schutzfolie nach einem der Ansprüche 1 bis 13, **dadurch gekennzeichnet, daß** die außen liegende Seite der Kunststoffolie (1) Hoch-, Tief- und/oder Folien- Prägungen aufweist.

15. Schutzfolie nach einem der Ansprüche 1 bis 14, **dadurch gekennzeichnet, daß** die außen liegende Seite der Kunststoffolie (1) mit einem Schutzlack zur Verbesserung der Kratzfestigkeit und der Entspiegelung versehen ist.

16. Schutzfolie nach einem der Ansprüche 1 bis 15, **dadurch gekennzeichnet, daß** die Abdeckfolie (4) eine Ritzung zwecks leichter Entfernung von der Schutzfolie (10) aufweist.

17. Schutzfolie nach einem der Ansprüche 1 bis 16, **dadurch gekennzeichnet, daß** die Kunststoffolie (1) auf der Ober- und/oder Unterseite eine mattierte Struktur aufweist.

18. Schutzfolie nach einem der Ansprüche 1 bis 17, **dadurch gekennzeichnet, daß** die Kunststoffolie (1) aus einer ersten Laminat-Kunststoffolie (13) und einer zweiten Laminat-Kunststoffolie (14) mit einer wahlweise dazwischen angeordneten graphischen Gestaltung (16) durch Lamination aufgebaut ist.

19. Schutzfolie nach einem der Ansprüche 1 bis 18, **dadurch gekennzeichnet, daß** die Kunststoffolie (1) aus einer ersten Laminat-Kunststoffolie (13), einer zweiten Laminat-Kunststoffolie (14) und einer dritten Laminat-Kunststoffolie (15) mit wahlweise dazwischen angeordneten graphischen Gestaltungen (16) bzw. (17) durch Lamination aufgebaut ist.

20. Schutzfolie nach einem der Ansprüche 1 bis 19, **dadurch gekennzeichnet, daß** die erste Laminat-Kunststoffolie (13) aus einer Weichkunststoffolie besteht.

21. Schutzfolie nach einem der Ansprüche 1 bis 20, **dadurch gekennzeichnet, daß** die Oberfläche der Kunststoffolie (1) bzw. die Oberfläche der ersten Laminat-Kunststoffolie (13) eine Oberflächengestaltung in Form von Linsen und Linsenstrukturen bzw. allgemeinen graphischen Gebilden aufweist.

22. Schutzfolie nach einem der Ansprüche 1 bis 21, **dadurch gekennzeichnet, daß** die Oberfläche der Kunststoffolie (1) bzw. die Oberfläche der ersten Laminat-Kunststoffolie (13) eine Oberflächengestaltung in Form von einem erhabenen mattierten, bis mehrere Millimeter breiten, umlaufenden Rand aufweist.

23. Verfahren zur Herstellung einer Schutzfolie nach einem der Ansprüche 1 bis 21, **gekennzeichnet durch** folgende Schritte:
- Bedrucken der transparenten thermoplastischen Kunststoffolie (1) mit einer graphischen Gestaltung (2) derart, daß eine Rahmenanordnung definiert wird,
- Rasterförmiges, einseitiges Beschichten der graphisch gestalteten Kunststoffolie (1,2) mit einer Klebebeschichtung (3) in einer Schichtdicke von 2 bis 50 Mikrometern,
- Trocknen der Schutzfolien-Anordnung (10),
- Aufbringen einer speziellen, leicht lösbaren Abdeckfolie (4) auf der Klebebeschichtung (3).

24. Verfahren zur Herstellung einer Schutzfolie nach einem der Ansprüche 1 bis 21, **gekennzeichnet durch** folgende Schritte:
- Bedrucken der transparenten, thermoplastischen ersten Laminat-Kunststoffolie (13) mit einer graphischen Gestaltung (16), und wahlweises Bedrucken der zweiten Laminat-Kunststoffolie (14) mit einer graphischen Gestaltung (17) und/oder wahlweises Bedrucken der dritten Laminat-Kunststoffolie (15) mit einer graphischen Gestaltung (2) derart, daß eine Rahmenanordnung definiert wird,
- Lamination dieser mindestens zwei graphisch gestalteten Laminat-Kunststoffolien (13,14,15) mittels Hochschmelzprozeß und Verwendung entsprechender Pressbleche zu einem Kunststoffolien-Verbund,
- Rasterförmiges, einseitiges Beschichten des graphisch gestalteten Kunststoffolien-Verbundes mit einer Klebebeschichtung (3) in einer Schichtdicke von 2 bis 50 Mikrometern,
- Trocknen der Schutzfolien-Anordnung (10),
- Aufbringen einer speziellen, leicht lösbaren Abdeckfolie (4) auf der Klebebeschichtung (3).

25. Verfahren zur Herstellung einer Schutzfolie nach einem der Ansprüche 1 bis 21, **gekennzeichnet durch** folgende Schritte:
- Herstellung der Kunststoffolie (1) mittels Spritzguß und Verwendung von thermoplastischem transparentem leicht fließfähig und schlagzäh eingestelltem Kunststoff und Ausbildung beliebiger grafisch gestalteter Oberflächenstrukturen,
- Bedrucken der transparenten thermoplastischen Kunststoffolie (1) mit einer graphischen Gestaltung (2) derart, daß eine Rahmenanordnung definiert wird,
- Rasterförmiges, einseitiges Beschichten der graphisch gestalteten Kunststoffolie (1,2) mit einer Klebebeschichtung (3) in einer Schichtdicke von 2 bis 50 Mikrometern,
- Trocknen der Schutzfolien-Anordnung (10),
- Aufbringen einer speziellen, leicht lösbaren Abdeckfolie (4) auf der Klebebeschichtung (3).

26. Verfahren zur Herstellung einer Schutzfolie nach einem der Ansprüche 23 bis 25, **dadurch gekennzeichnet, daß** die Klebebeschichtung (3) in einer Schichtdicke von lediglich 2 bis 10 Mikrometern aufgebracht wird.

27. Verfahren zur Herstellung einer Schutzfolie nach einem der Ansprüche 23 bis 26, **dadurch gekennzeichnet, daß** die Klebebeschichtung (3) mittels Siebdruck aufgebracht wird.

28. Verfahren zur Herstellung einer Schutzfolie nach einem der Ansprüche 24, 26 oder 27, **dadurch gekennzeichnet, daß** die verwendeten Pressbleche ein- oder beidseitig strukturiert sind und derart erhabene und vertiefte Strukturen, Linsen-förmige und graphische Gebilde auf den Oberflächen der Kunststoff-Verbund Folie erzeugen.

29. Verfahren zur Herstellung einer Schutzfolie nach einem der Ansprüche 23 bis 28, **dadurch gekennzeichnet, daß** die Klebewirkung der Klebebeschichtung (3) von wiederabziehbar bis unlösbar eingestellt werden kann.

30. Verfahren zur Herstellung einer Schutzfolie nach einem der Ansprüche 23 bis 29, **dadurch gekennzeichnet, daß** die Abdeckfolie (4) vor dem Aufbringen auf die Schutzfolie (10) auf ihrer der Klebebeschichtung (3) zugewandten Seite mit einer Trennbeschichtung (6) versehen wird.

31. Verfahren zur Herstellung einer Schutzfolie nach einem der Ansprüche 24 bis 30, **dadurch gekennzeichnet, daß** die Abdeckfolie (4) auf einer oder beiden Seiten mit einer graphischen Gestaltung (5,12) bedruckt wird.

32. Verfahren zur Herstellung einer Schutzfolie nach einem der Ansprüche 23 bis 31, **dadurch gekennzeichnet, daß** die Schutzfolien (10) im Mehrfachnutzen hergestellt und erst anschließend vereinzelt werden.

## Claims

1. Protective film for protecting and framing graphic objects, such as photographs, visiting cards, computer printouts, photocopies and printed graphic products in general based on largely transparently designed protective film arrangements made of thermoplastic plastics films, to which an adhesive coating is applied covered with an easily detachable masking film, **characterised in that** the adhesive coating (3) is a transparent adhesive coating applied in the form of a raster with a layer thickness of between 2 and 50 micrometres.

2. Protective film according to claim 1, **characterised in that** the adhesive coating (3) has a layer thickness of only 2 to 10 micrometres.

3. Protective film according to claim 1 or 2, **characterised in that** the adhesive coating (3) has a 30% to 70% area coverage, and consists of unconnected elements of 20 to 200 micrometres in dimension.

4. Protective film according to any one of claims 1 to 3, **characterised in that** the adhesive coating (3) is applied by means of screen printing.

5. Protective film according to any one of claims 1 to 4, **characterised in that** the adhesive coating (3) is based on acrylic resins, polyester resins and/or polyurethanes and the adhesion can be adjusted from permanently adhesive to detachable.

6. Protective film according to any one of claims 1 to 5, **characterised in that** the adhesive coating (3) is partially applied.

7. Protective film according to any one of claims 1 to 6, **characterised in that** the plastics film (1) has a thickness of between 80 and 800 micrometres.

8. Protective film according to any one of claims 1 to 7, **characterised in that** the plastics film (1) is printed with a graphic design (2).

9. Protective film according to any one of claims 1 to 8, **characterised in that** the masking film (4) carries a release coating (6) on its side facing the adhesive coating (3).

10. Protective film according to any one of claims 1 to 9, **characterised in that**, partially and preferably along one of the four side edges and/or one or more of the four comers, the release coating (6), over a width of several millimetres, has a substantially stronger anti-adhesive effect or no adhesive effect with respect to the adhesive coating (3).

11. Protective film according to any one of claims 1 to 10, **characterised in that** the masking film (4) is printed with a graphic design (5, 12) on one or both sides.

12. Protective film according to any one of claims 1 to 11, **characterised in that** the dimension of the protective film (10) has a credit card format.

13. Protective film according to any one of claims 1 to 12, **characterised in that** the dimension of the protective film (10) has a photo format or postcard format.

14. Protective film according to any one of claims 1 to 13, **characterised in that** the outer side of the plastics film (1) has high-relief, deep and/or foil embossings.

15. Protective film according to any one of claims 1 to 14, **characterised in that** the outer side of the plastics film (1) is provided with a protective lacquer to improve the scratch resistance and the anti-reflective property.

16. Protective film according to any one of claims 1 to 15, **characterised in that** the masking film (4) has abrasion for easier removal of the protective film (10).

17. Protective film according to any one of claims 1 to 16, **characterised in that** the plastics film (1) has a matt structure on the upper and/or lower side.

18. Protective film according to any one of claims 1 to 17, **characterised in that** the plastics film (1) is constructed by lamination from a first laminate plastics film (13) and a second laminate plastics film (14) with a graphic design (16) optionally arranged therebetween.

19. Protective film according to any one of claims 1 to 18, **characterised in that** the plastics film (1) is constructed by lamination from a first laminate plastics film (13), a second laminate plastics film (14) and a third laminate plastics film (15) with graphic designs (16) or (17) optionally arranged therebetween.

20. Protective film according to any one of claims 1 to 19, **characterised in that** the first laminate plastics film (13) consists of a flexible plastics film.

21. Protective film according to any one of claims 1 to 20, **characterised in that** the surface of the plastics film (1) or the surface of the first laminate plastics film (13) has a surface design in the form of lenses and lens structures or general graphic objects.

22. Protective film according to any one of claims 1 to 21, **characterised in that** the surface of the plastics film (1) or the surface of the first laminate plastics film (13) has a surface design in the form of a raised matt peripheral edge up to several millimetres in width.

23. Method for producing a protective film according to any one of claims 1 to 21, **characterised by** the following steps:
- printing the transparent thermoplastic plastics film (1) with a graphic design (2) in such a way that a frame arrangement is defined,
- one sided coating in the form of a raster, of the graphically designed plastics film (1, 2) with an adhesive coating (3) in a layer thickness of 2 to 50 micrometres,
- drying the protective film arrangement (10),
- applying a special easily detachable masking film (4) on the adhesive coating (3).

24. Method for producing a protective film according to any one of claims 1 to 21, **characterised by** the following steps:
- printing the transparent, thermoplastic first laminate plastics film (13) with a graphic design (16) and optional printing of the second laminate plastics film (14) with a graphic design (17) and/or optional printing of the third laminate plastics film (15) with a graphic design (2) in such a way that a frame arrangement is defined,
- lamination of these at least two graphically designed laminate plastics films (13, 14, 15) by means of a high melting process and use of appropriate press platens to form a plastics film composite,
- one sided coating in the form of a raster, of the graphically designed plastics film composite with an adhesive coating (3) in a layer thickness of 2 to 50 micrometres,
- drying the protective film arrangement (10),
- application of a special, easily detachable masking film (4) on the adhesive coating (3).

25. Method for producing a protective film according to any one of claims 1 to 21, **characterised by** the following steps:
- production of the plastics film (1) by means of injection moulding and use of thermoplastic transparent plastics material adjusted to be free-flowing and impact resistant and formation of any desired graphically designed surface structures,
- printing the transparent thermoplastic plastics film (1) with a graphic design (2) in such a way that a frame arrangement is defined,
- one sided coating in the form of a raster, of the graphically designed plastics film (1, 2) with an adhesive coating (3) in a layer thickness of 2 to 50 micrometres,
- drying the protective film arrangement (10),
- application of a special, easily detachable masking film (4) on the adhesive coating (3).

26. Method for producing a protective film according to any one of claims 23 to 25, **characterised in that** the adhesive coating (3) is applied in a layer thickness of only 2 to 10 micrometres.

27. Method for producing a protective film according to any one of claims 23 to 26, **characterised in that** the adhesive coating (3) is applied by means of screen printing.

28. Method for producing a protective film according to any one of claims 24, 26 or 27, **characterised in that** the press platens used are structured on one or both sides and thus produce raised and recessed structures, lens-shaped and graphic objects on the surfaces of the plastics composite film.

29. Method for producing a protective film according to any one of claims 23 to 28, **characterised in that** the adhesive effect of the adhesive coating (3) can be adjusted from removable to non-detachable.

30. Method for producing a protective film according to any one of claims 23 to 29, **characterised in that** the masking film (4) is provided with a release coating (6) on its side facing the adhesive coating (3) prior to application onto the protective film (10).

31. Method for producing a protective film according to any one of claims 24 to 30, **characterised in that** the masking film (4) is printed with a graphic design (5, 12) on one or both sides.

32. Method for producing a protective film according to any one of claims 23 to 31, **characterised in that** the protective films (10) are produced in multiple printed panels and are only separated subsequently.

## Revendications

1. Film de protection pour protéger et encadrer des produits graphiques tels que des photos, des cartes de visite, des documents informatiques, des photocopies et des produits graphiques d'imprimantes en général, basé sur des structures de film protecteur en grande partie transparentes composées de films thermoplastiques sur lesquels est appliqué un revêtement collant qui est lui-même recouvert par un film de recouvrement facilement détachable, **caractérisé en ce que** le revêtement collant (3) est un revêtement adhésif transparent et appliqué en forme de grille, avec une épaisseur de couche située entre 2 et 50 microns.

2. Film de protection selon la revendication 1, **caractérisé en ce que** le revêtement collant (3) présente une épaisseur de couche de 2 à 10 microns seulement.

3. Film de protection selon la revendication 1 ou 2, **caractérisé en ce que** le revêtement collant (3) présente une couverture de 30 % à 70 % et se compose d'éléments de 20 à 200 microns qui ne sont pas reliés entre eux.

4. Film de protection selon l'une des revendications 1 à 3, **caractérisé en ce que** le revêtement collant (3) est appliqué par sérigraphie.

5. Film de protection selon l'une des revendications 1 à 4, **caractérisé en ce que** le revêtement collant (3) est à base de résines acryliques, de résines de polyester et/ou de polyuréthannes et l'adhérence peut être ajustée entre adhérence permanente et détachable.

6. Film de protection selon l'une des revendications 1 à 5, **caractérisé en ce que** le revêtement collant (3) est appliqué partiellement.

7. Film de protection selon l'une des revendications 1 à 6, **caractérisé en ce que** le film en matière plastique (1) présente une épaisseur située entre 80 et 800 microns.

8. Film de protection selon l'une des revendications 1 à 7, **caractérisé en ce qu'**une structure graphique (2) est imprimée sur le film en matière plastique (1).

9. Film de protection selon l'une des revendications 1 à 8, **caractérisé en ce que** le film de recouvrement (4) porte, sur sa face tournée vers le revêtement collant (3), un revêtement de séparation (6).

10. Film de protection selon l'une des revendications 1 à 9, **caractérisé en ce que** le revêtement de séparation (6) présente, partiellement et de préférence le long de l'un des quatre bords latéraux et/ou de l'un au moins des quatre coins, une action antiadhésive nettement plus forte, sur plusieurs millimètres de large, ou pas d'action adhésive du tout par rapport au revêtement collant (3).

11. Film de protection selon l'une des revendications 1 à 10, **caractérisé en ce qu'**une structure graphique (5, 12) est imprimée sur une face ou sur les deux faces du film de recouvrement (4).

12. Film de protection selon l'une des revendications 1 à 11, **caractérisé en ce que** les dimensions du film de protection (10) correspondent au format d'une carte de crédit.

13. Film de protection selon l'une des revendications 1 à 12, **caractérisé en ce que** les dimensions du film de protection (10) correspondent au format d'une photo ou d'une carte postale.

14. Film de protection selon l'une des revendications 1 à 13, **caractérisé en ce que** la face extérieure du film en matière plastique (1) présente des bosses, des creux et/ou des parties gaufrées.

15. Film de protection selon l'une des revendications 1 à 14, **caractérisé en ce que** la face extérieure du film de protection (1) est pourvue d'un vernis de protection pour augmenter la résistance aux éraflures et l'atténuation des réflexions.

16. Film de protection selon l'une des revendications 1 à 15, **caractérisé en ce que** le film de recouvrement (4) présente une rayure pour permettre d'enlever facilement le film de protection (10).

17. Film de protection selon l'une des revendications 1 à 16, **caractérisé en ce que** le film en matière plastique (1) présente sur sa face supérieure et/ou inférieure une structure mate.

18. Film de protection selon l'une des revendications 1 à 17, **caractérisé en ce que** le film en matière plastique (1) est composé par stratification d'un premier film stratifié en matière plastique (13) et d'un second film stratifié en matière plastique (14) avec une structure graphique (16) disposée entre les deux à titre optionnel.

19. Film de protection selon l'une des revendications 1 à 18, **caractérisé en ce que** le film en matière plastique (1) est composé par stratification d'un premier film stratifié en matière plastique (13), d'un deuxième film stratifié en matière plastique (14) et d'un troisième film stratifié en matière plastique (15), avec des structures graphiques (16), (17) disposées entre ces films à titre optionnel.

20. Film de protection selon l'une des revendications 1 à 19, **caractérisé en ce que** le premier film stratifié en matière plastique (13) se compose d'un film en matière plastique souple.

21. Film de protection selon l'une des revendications 1 à 20, **caractérisé en ce que** la surface du film en matière plastique (1) ou la surface du premier film stratifié en matière plastique (13) présente une structure superficielle en forme de lentilles et de structures de lentilles ou de structures graphiques générales.

22. Film de protection selon l'une des revendications 1 à 21, **caractérisé en ce que** la surface du film en matière plastique (1) ou la surface du premier film stratifié en matière plastique (13) présente une structure superficielle en forme de bord périphérique mat surélevé, dont la largeur va jusqu'à plusieurs millimètres.

23. Procédé pour fabriquer un film de protection selon l'une des revendications 1 à 21, **caractérisé par** les étapes suivantes :
- impression d'une structure graphique (2) sur le film transparent en matière thermoplastique (1) de manière à définir un cadre,
- application unilatérale en forme de grille, sur le film en matière plastique à forme graphique (1, 2), d'un revêtement collant (3) d'une épaisseur de 2 à 50 microns,
- séchage du film de protection (10),
- application, sur le revêtement collant (3), d'un film de recouvrement spécial (4) facilement détachable.

24. Procédé pour fabriquer un film de protection selon l'une des revendications 1 à 21, **caractérisé par** les étapes suivantes :
- impression d'une structure graphique (16) sur le premier film transparent stratifié en matière thermoplastique (13), et impression optionnelle d'une structure graphique (17) sur le deuxième film stratifié en matière plastique (14) et/ou impression optionnelle d'une structure graphique (2) sur le troisième film stratifié en matière plastique (15), de manière à définir un cadre,
- stratification de ces deux films stratifiés en matière plastique (13, 14, 15), ou plus, à structure graphique, à l'aide d'un procédé à point de fusion élevé et avec utilisation de plaques pressées appropriées, pour former une construction composite de films en matière plastique,
- application unilatérale, en forme de grille, d'un revêtement collant (3) d'une épaisseur de 2 à 50 microns sur ladite construction composite à structure graphique,
- séchage du film de protection (10),
- application, sur le revêtement collant (3), d'un film de recouvrement spécial (4) facilement détachable.

25. Procédé pour fabriquer un film de protection selon l'une des revendications 1 à 21, **caractérisé par** les étapes suivantes :
- fabrication du film en matière plastique (1) par moulage par injection et utilisation d'une matière thermoplastique transparente facilement fluide et résiliente, et formation de n'importe quelles structures superficielles graphiques,
- impression d'une structure graphique (2) sur le film thermoplastique transparent (1), de manière à définir un cadre,
- application unilatérale, en forme de grille, d'un revêtement collant (3) d'une épaisseur de 2 à 50 microns sur le film en matière plastique à structure graphique (1, 2),
- séchage du film de protection (10),
- application, sur le revêtement collant (3), d'un film de recouvrement spécial (4) facilement détachable.

26. Procédé pour fabriquer un film de protection selon l'une des revendications 23 à 25, **caractérisé en ce que** le revêtement collant (3) est appliqué avec une épaisseur de 2 à 10 microns seulement.

27. Procédé pour fabriquer un film de protection selon l'une des revendications 23 à 26, **caractérisé en ce que** le revêtement collant (3) est appliqué par sérigraphie.

28. Procédé pour fabriquer un film de protection selon l'une des revendications 24, 26 ou 27, **caractérisé en ce que** les plaques pressées utilisées sont structurées sur une ou deux faces et forment des structures surélevées ou creusées, et des structures en forme de lentilles et des structures graphiques sur les surfaces du film composite.

29. Procédé pour fabriquer un film de protection selon l'une des revendications 23 à 28, **caractérisé en ce que** l'action collante du revêtement collant (3) peut être ajustée de pelable à indétachable.

30. Procédé pour fabriquer un film de protection selon l'une des revendications 23 à 29, **caractérisé en ce que** le film de recouvrement (4), avant d'être appliqué sur le film de protection (10), est pourvu sur sa face tournée vers le revêtement collant (3) d'un revêtement de séparation (6).

31. Procédé pour fabriquer un film de protection selon l'une des revendications 24 à 30, **caractérisé en ce qu'**une structure graphique (5, 12) est imprimée sur une ou deux faces du film de recouvrement (4).

32. Procédé pour fabriquer un film de protection selon l'une des revendications 23 à 31, **caractérisé en ce que** les films de protection (10) sont fabriqués en un flan multiple et ne sont divisés qu'ultérieurement.
